# EUROPEAN PATENT SPECIFICATION

(11) **EP 3 457 762 B1**
(45) Date of publication and mention of the grant of the patent: **31.07.2024**
(21) Application number: 18186922.3
(22) Date of filing: 20.09.2012
(51) Int. Cl.: H04W 48/02, H04W 48/06

(54) **METHOD FOR CONTROLLING ACCESS OF TERMINAL TO SHARED NETWORK AND ACCESS NETWORK ELEMENT**
VERFAHREN ZUR STEUERUNG DES ZUGANGS EINES ENDGERÄTS ZU EINEM GEMEINSAM GENUTZTEN NETZWERK UND ZUGANGSNETZWERKELEMENT
PROCÉDÉ DE CONTRÔLE D'ACCÈS D'UN TERMINAL À UN RÉSEAU PARTAGÉ ET ÉLÉMENT DE RÉSEAU D'ACCÈS

(30) Priority: 20.09.2011 CN 201110279432
(43) Date of publication of application: 20.03.2019
(62) Divisional of application: 12833581.7
(73) Proprietor: Huawei Technologies Co., Ltd., Shenzhen, Guangdong 518129 (CN)
(72) Inventor: GUO, Yali, Shenzhen, Guangdong 518129 (CN); ZHANG, Wanqiang, Shenzhen, Guangdong 518129 (CN); GUO, Wei, Shenzhen, Guangdong 518129 (CN)
(74) Representative: Maiwald GmbH

(56) References cited:
- VODAFONE: "Applicability of EAB in a Shared Network Environment", 3GPP DRAFT; R2-114012, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 15 August 2011 (2011-08-15), XP050539686
- "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V10.5.0, 24 August 2011 (2011-08-24), pages 1 - 282, XP050553747
- "3rd Generation Partnership Project; Technical Specification Group Services and System Aspects; Service accessibility (Release 11)", 3GPP STANDARD; 3GPP TS 22.011, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V11.0.0, 20 June 2011 (2011-06-20), pages 1 - 26, XP050553344

## Description

### TECHNICAL FIELD

The present invention relates to the communications field, and in particular, to a method for controlling access of a terminal to a shared network and an access network element.

### BACKGROUND

In 3GPP (The 3rd Generation Partnership Project, 3rd Generation Partnership Project), an access network node or a core network node can be shared among multiple operators, and network sharing includes two sharing modes. One mode is an MOCN (Multi-Operator Core Network, multi-operator core network) mode. In MOCN mode, only an access network is shared, and one access network element can simultaneously connect to core networks of multiple different operators. The other mode is a GWCN (Gateway Core Network, shared gateway core network) mode. In this mode, an access network is shared, a mobility management network element of a core network is also shared among multiple operators, and the mobility management network element of the core network can connect to gateways of multiple operators.

An MTC (Machine Type Communications, machine type communications) application refers to network communications between one or more network elements without manual participation, such as transportation control and management, remote meter reading, remote monitoring, mobile payment, location tracking, or medical supervision. The MTC service will suddenly quicken a growth rate in the number of wireless communications terminals. Then a huge number of terminals will cause congestion on a wireless communications network due to overload, and a part of the terminals will be barred from accessing a shared network so as to solve the congestion problem with the wireless communications network.

However, in a deployment scenario where an access network or even a core network supports network sharing, only a terminal with a specific AC (Access Class, access class) value can be barred from the access. When congestion occurs on the wireless communications network, the wireless communications network can only simultaneously bar, according to the AC value, terminals that correspond to all PLMNs (Public Land Mobile Network, public land mobile network) with network sharing, which brings great inconvenience for operators of the shared network to perform differentiated control of respective users.

3^{rd} Generation Partnership Project; Technical Specification Group Services and System Aspects; Service accessibility (Release 11), 3GPP Standard; 3GPP TS 22.011 discloses that a network may broadcast EAB information.

Vodafone, "Applicability of EAB in a Shared Network Environment", 3GPP Draft, R2-114012 discloses a proposal 2: A PLMN indication is broadcast with each set of EAB parameters to identify for which selected PLMN the EAB applies.

3^{rd} Generation Partnership Project; Technical Specification Group Services and System Aspects; Service accessibility (Release 10), 3GPP Standard; 3GPP TS 23.401 discloses MME control of overload.

### SUMMARY

The invention is defined by the appended claims.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings
FIG. 1 is a schematic flowchart of a method for controlling access of a terminal to a shared network;
FIG. 2 is a schematic flowchart of another method for controlling access of a terminal to a shared network;
FIG. 3 is a schematic flowchart of another method for controlling access of a terminal to a shared network;
FIG. 4 is a schematic flowchart of another method for controlling access of a terminal to a shared network;
FIG. 5 is a schematic flowchart of another method for controlling access of a terminal to a shared network according to an embodiment of the present invention;
FIG. 6 is a schematic flowchart of another method for controlling access of a terminal to a shared network;
FIG. 7 is a schematic flowchart of another method for controlling access of a terminal to a shared network;
FIG. 8 is a schematic structural diagram of an access network element according to an embodiment of the present invention;
FIG. 9 is a schematic structural diagram of another access network element;
FIG. 10 is a schematic structural diagram of another access network element;
FIG. 11 is a schematic structural diagram of another access network element;
FIG. 12 is a schematic structural diagram of a determining module of an access network element; and
FIG. 13 is a schematic structural diagram of another determining module of an access network element according.

### DESCRIPTION OF EMBODIMENTS

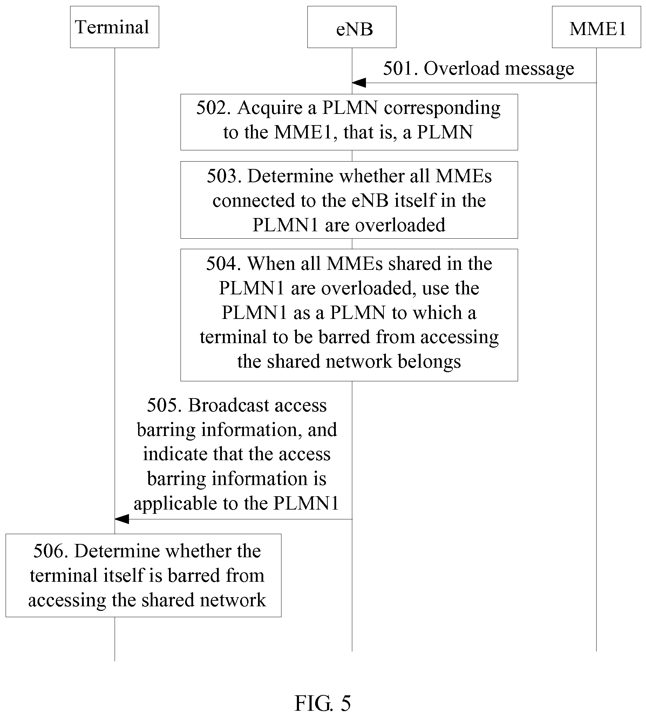

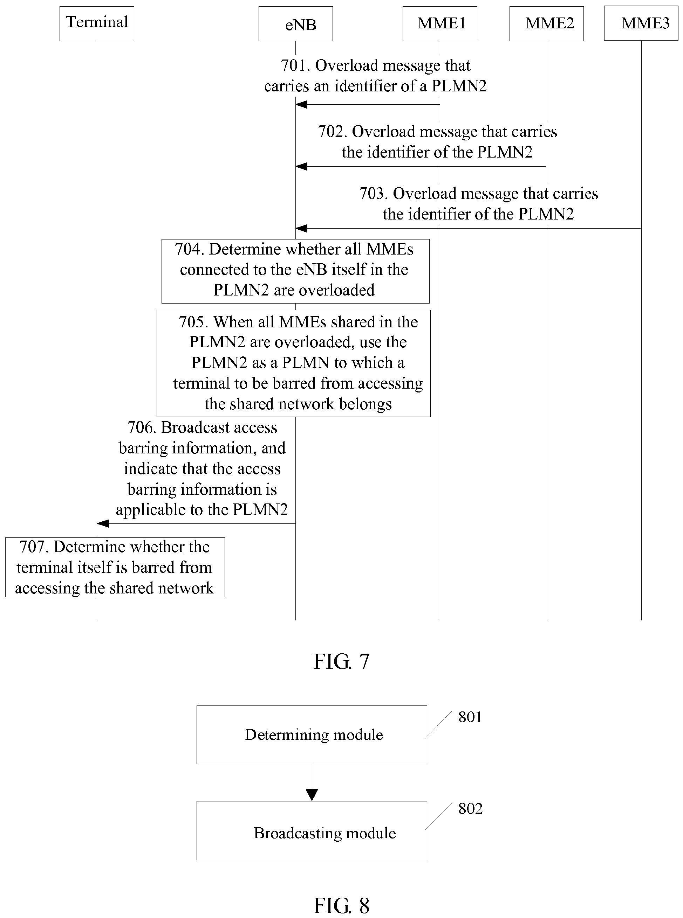

To make the objectives, technical solutions, and advantages of the present invention more comprehensible, the following further describes the present invention in detail with reference to the accompanying drawings. The embodiments depicted in figures 5 and 8 and described in the related passages below fall under the scope of the claims.

All other embodiments are mere examples which help understand the present invention.

Currently, on an existing 3GPP network, including a GSM (Global System for Mobile communication, Global System for Mobile Communications) network, a UMTS (Universal Mobile Telecommunications System, Universal Mobile Telecommunications System) network, and an LTE (Long Time Evolve, Long Term Evolution) network, a user terminal stores AC information. For example, an AC value between 0 and 9 is randomly allocated to all user terminals. When congestion occurs on a wireless communications network, an access network element broadcasts access barring information that carries an AC value, so that a terminal determines, according to the access barring information, whether the terminal itself is barred from accessing the wireless communications network, thereby solving the congestion on the wireless communications network.

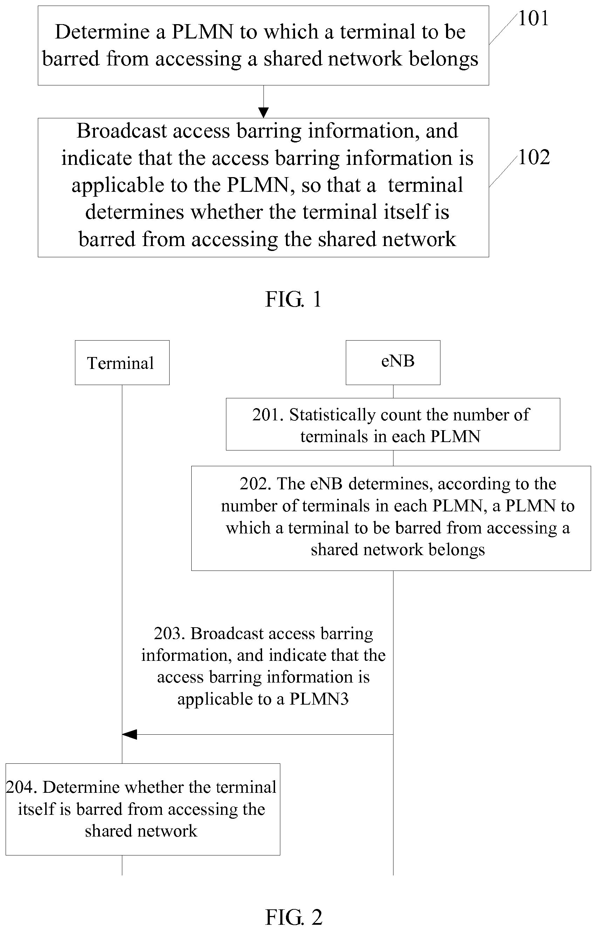

As shown in FIG. 1, a method for controlling access of a terminal to a shared network is provided. In the method, an execution body is an access network element. The method includes:
101. Determine a PLMN to which a terminal to be barred from accessing a shared network belongs.
102. Broadcast access barring information, where the access barring information includes information of the determined PLMN to which the terminal to be barred from accessing the shared network belongs; or broadcast access barring information and the determined PLMN to which the terminal to be barred from accessing the shared network belongs, so that a terminal determines, according to the broadcast access barring information or correspondence between the broadcast access barring information and the determined PLMN to which the terminal to be barred from accessing the shared network belongs, whether the terminal itself is barred from accessing the shared network.

In the method for controlling access of a terminal to a shared network shown in FIG. 1, when a wireless communications network is overloaded, a PLMN to which a terminal to be barred from accessing a shared network belongs is determined, and access barring information is broadcast, where the access barring information includes information of the determined PLMN to which the terminal to be barred from accessing the shared network belongs; or access barring information and the PLMN to which the terminal to be barred from accessing the shared network belongs are broadcast, so that a terminal can obtain the information of the PLMN barred from accessing the shared network and determine whether the terminal itself is barred from accessing the shared network, thereby solving the problem that the wireless communications network can only simultaneously bar terminals of all PLMNs with network sharing, and it is inconvenient for operators of the shared network to perform differentiated control of respective users.

As shown in FIG. 2, this embodiment further provides another method for controlling access of a terminal to a shared network.

It should be noted that in all of the following embodiments, the method for controlling access of a terminal to a shared network is described by using an LTE network as an example; and correspondingly, an access network element may be an eNB (evolved Node B, evolved base station), and a mobility management network element may be an MME (Mobility Management Entity, mobility management entity).

It should be noted that on a GSM network, a corresponding access network element may be an RNC (Radio Network Controller, radio network controller) or a node B (NodeB), and a mobility management network element may be an MSC (Mobile Switching Center, mobile switching center).

On a UMTS network, a corresponding access network element may be an RNC (Radio Network Controller, radio network controller) or a node B (NodeB), and a mobility management element may be an SGSN (Serving General Packet Radio Service Support Node, serving general packet radio service support node).

Congestion on a wireless communications network includes overload of an access network element or overload of a mobility management network element. The method for controlling access of a terminal to a shared network shown in FIG. 2 may be applied to a case where an access network element is overloaded.

The method for controlling access of a terminal to a shared network shown in FIG. 2 includes:
201. When an eNB is overloaded, the eNB counts the number of terminals that access each PLMN of the eNB itself.

In this embodiment, it is assumed that a current eNB is shared simultaneously by a PLMN1, a PLMN2, and a PLMN3; and it is counted that the number of terminals that access the PLMN1 of the eNB is 50, the number of terminals that access the PLMN2 is 200, and the number of terminals that access the PLMN3 is 1000.

202. The eNB determines, according to the number of terminals in each PLMN, a PLMN to which a terminal to be barred from accessing a shared network belongs.

In the present invention, there may include multiple methods for the eNB to determine, according to the number of terminals in each PLMN, the PLMN to which the terminal to be barred from accessing the shared network belongs. For example, a PLMN that includes a number of terminals reaching a preset number is used as the PLMN to which the terminal to be barred from accessing the shared network belongs, or a PLMN that includes the largest number of terminals among PLMNs supported by the eNB is used as the PLMN to which the terminal to be barred from accessing the shared network belongs, or a PLMN that includes the smallest number of terminals among PLMNs supported by the eNB is used as the PLMN to which the terminal to be barred from accessing the shared network belongs. In the present invention, a specific method for the eNB to determine, according to the number of terminals in each PLMN, the PLMN to which the terminal to be barred from accessing the shared network belongs is not limited.

In this embodiment, the PLMN that includes the largest number of terminals is used as the PLMN to which the terminal to be barred from accessing the shared network belongs, and is specifically the PLMN3.

203. The eNB broadcasts access barring information, and indicates that the access barring information is applicable to the PLMN3.

The access barring information includes information of the PLMN to which the terminal to be barred from accessing the shared network belongs, so as to indicate that the access barring information is applicable to the PLMN3, where the PLMN is determined in step 202 and the information of the PLMN may be an identifier of the PLMN.

Alternatively, in step 203, access barring information and the PLMN to which the terminal to be barred from accessing the shared network belongs are specifically broadcast, so as to indicate that the access barring information is applicable to the PLMN3, where the PLMN is determined in step 202.

It should be noted that the access barring information includes an AC value of the terminal barred from accessing the shared network and/or an access barring factor. The AC value may be used by a terminal to determine whether the terminal itself is barred from accessing the shared network. One of conditions for that a terminal is barred from accessing the shared network may be that an AC value stored in the terminal itself is the same as the AC value broadcast by the eNB, and the access barring factor is a comparison basis for a terminal to determine whether the terminal itself is barred from accessing the shared network.

204. A terminal determines whether the terminal itself is barred from accessing the shared network.

A method for a terminal to determine whether the terminal itself is barred from accessing the shared network may include: when the terminal determines that its own AC value is the same as the AC value in the access barring information and the terminal belongs to the PLMN3, determining that the shared network cannot be connected through the current eNB, so as to reduce load of the current eNB; or learning, by the terminal, by calculation according to the AC value and the access barring factor that are broadcast by the eNB, whether the terminal itself is barred from accessing the current shared network.

The learning, by the terminal, by calculation according to the AC value and the access barring factor that are broadcast by the eNB, whether the terminal itself is barred from accessing the current shared network may include:
generating, by the terminal, a random number, and comparing the generated random number with the access barring factor broadcast by the eNB; and determining that the shared network cannot be connected through the current eNB if the generated random number is greater than the access barring factor broadcast by the eNB, the terminal determines that its own AC value is the same as the AC value in the access barring information, and the terminal belongs to the PLMN3.

It should be noted that if congestion still exists on the current eNB after the terminal of the PLMN3 is barred from accessing the shared network, the eNB continues to broadcast the access barring information, and indicates that the access barring information is applicable to the PLMN2 that is second only to the PLMN3 in terms of the number of terminals, so that the load is alleviated by reducing the number of terminals that access the eNB.

In the method for controlling access of a terminal to a shared network shown in FIG. 2, when an eNB is overloaded, a PLMN barred from accessing the shared network is determined, and access barring information is broadcast, where the access barring information includes information of the determined PLMN to which the terminal to be barred from accessing the shared network belongs; or access barring information and the determined PLMN to which the terminal to be barred from accessing the shared network belongs are broadcast, so that a terminal can determine, according to the PLMN to which the terminal itself belongs, whether the terminal itself can access the shared network, thereby lowering load of the eNB and solving the problem that wireless communications network can only simultaneously bar terminals of all PLMNs with network sharing, and it is inconvenient for operators of the shared network to perform differentiated control of respective users.

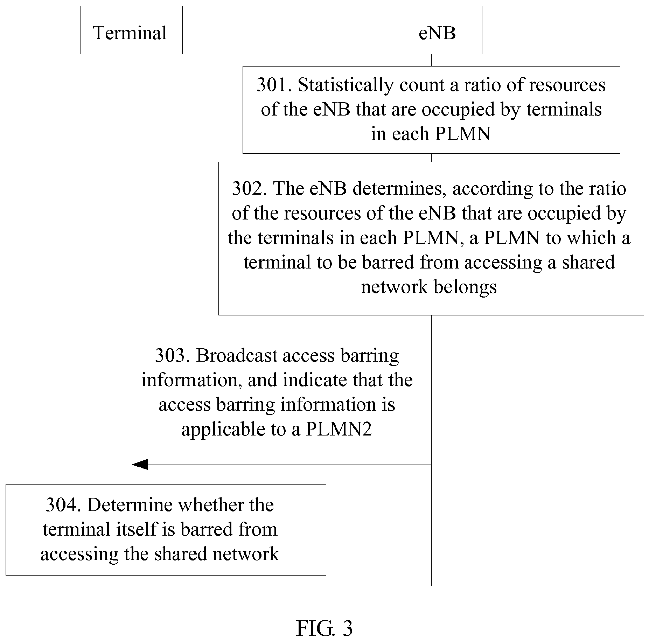

As shown in FIG. 3, this embodiment further provides another method for controlling access of a terminal to a shared network. The method may also be applied to a case where an access network element is overloaded. The method includes:
301. When an eNB is overloaded, the eNB counts a ratio of resources of the eNB that are occupied by terminals accessing each PLMN of the eNB.

In this embodiment, it is assumed that a current eNB is shared simultaneously by a PLMN1, a PLMN2, and a PLMN3; and it is counted that resources that are occupied by terminals accessing the PLMN1 of the eNB are 10%, resources that are occupied by terminals accessing the PLMN2 are 50%, and resources that are occupied by terminals accessing the PLMN3 are 30%.

302. The eNB determines, according to the ratio of the resources of the eNB that are occupied by the terminals in each PLMN, a PLMN to which a terminal to be barred from accessing a shared network belongs.

In the present invention, there includes multiple methods for the eNB to determine, according to the ratio of the resources of the eNB that are occupied by the terminals in each PLMN, the PLMN to which the terminal to be barred from accessing the shared network belongs. For example, a PLMN in which terminals occupy a ratio of resources of the eNB that reaches a preset ratio is used as the PLMN to which the terminal to be barred from accessing the shared network belongs, or a PLMN in which terminals occupy a largest ratio of resources of the eNB among PLMNs supported by the eNB is used as the PLMN to which the terminal to be barred from accessing the shared network belongs, or a PLMN in which terminals occupy a smallest ratio of resources of the eNB among PLMNs supported by the eNB is used as the PLMN to which the terminal to be barred from accessing the shared network belongs. In the present invention, a method for the eNB to determine, according to the ratio of the resources of the eNB that are occupied by the terminals in each PLMN, the PLMN to which the terminal to be barred from accessing the shared network belongs is not limited.

In this embodiment, the PLMN in which terminals occupy the largest ratio of the resources is used as the PLMN to which the terminal to be barred from accessing the shared network belongs, and is specifically the PLMN2.

303. The eNB broadcasts access barring information, and indicates that the access barring information is applicable to the PLMN2.

The access barring information includes information of the PLMN to which the terminal to be barred from accessing the shared network belongs, so as to indicate that the access barring information is applicable to the PLMN2, where the PLMN is determined in step 302 and the information of the PLMN may be an identifier of the PLMN.

Alternatively, in step 303, access barring information and the PLMN to which the terminal to be barred from accessing the shared network belongs are specifically broadcast, so as to indicate that the access barring information is applicable to the PLMN2, where the PLMN is determined in step 302.

It should be noted that the access barring information includes an AC value of the terminal barred from accessing the shared network and/or an access barring factor. The AC value may be used by a terminal to determine whether the terminal itself is barred from accessing the shared network. One of conditions for determining that a terminal is barred from accessing the shared network may be that an AC value stored in the terminal itself is the same as the AC value broadcast by the eNB, and the access barring factor is a comparison basis for a terminal to determine whether the terminal itself is barred from accessing the shared network.

304. A terminal determines whether the terminal itself is barred from accessing the shared network.

Specifically, when a terminal determines that its own AC value is the same as the AC value in the access barring information and the terminal belongs to the PLMN2, the shared network cannot be connected through the current eNB, so as to reduce load of the current eNB; or the terminal learns, by calculation according to the AC value and the access barring factor that are broadcast by the eNB, whether the terminal itself is barred from accessing the current shared network.

The learning, by the terminal, by calculation according to the AC value and the access barring factor that are broadcast by the eNB, whether the terminal itself is barred from accessing the current shared network may include:
generating, by the terminal, a random number, and comparing the generated random number with the access barring factor broadcast by the eNB; and determining that the shared network cannot be connected through the current eNB if the generated random number is greater than the access barring factor broadcast by the eNB, the terminal determines that its own AC value is the same as the AC value in the access barring information, and the terminal belongs to the PLMN2.

It should be noted that if congestion still exists on the current eNB after the terminal of the PLMN2 is barred from accessing the shared network, the eNB continues to broadcast the access barring information, and indicates that the access barring information is applicable to the PLMN3 that is second only to the PLMN2 in terms of a ratio of occupied resources, so that the load is alleviated by reducing the number of terminals that access the eNB.

In the method for controlling access of a terminal to a shared network shown in FIG. 3, when an eNB is overloaded, a PLMN to which a terminal to be barred from accessing a shared network belongs is determined, and access barring information is broadcast, where the access barring information includes information of the determined PLMN to which the terminal to be barred from accessing the shared network belongs; or access barring information and the determined PLMN to which the terminal to be barred from accessing the shared network belongs are broadcast, so that a terminal can determine, according to the PLMN to which the terminal itself belongs, whether the terminal itself can access the shared network, thereby lowering load of the eNB and solving the problem that wireless communications network can only simultaneously bar terminals of all PLMNs with network sharing, and it is inconvenient for operators of the shared network to perform differentiated control of respective users.

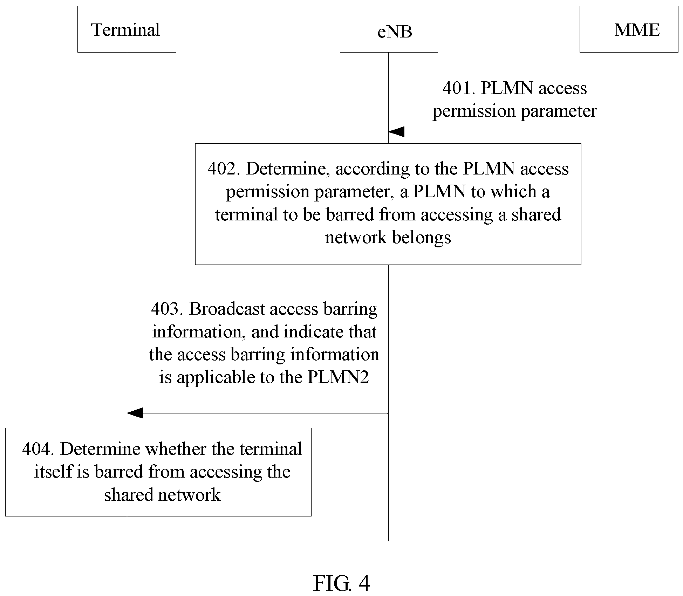

As shown in FIG. 4, this embodiment further provides another method for controlling access of a terminal to a shared network. The method may also be applied to a case where an access network element is overloaded. The method includes:
401. An MME sends a PLMN access permission parameter to an eNB.

In this method, it is assumed that a current eNB is simultaneously shared by a PLMN1, a PLMN2, and a PLMN3; and the PLMN access permission parameter is specifically one of access grant priority information, access barring priority information, and an access grant percentage parameter or an access barring percentage parameter.

For example, the access grant priority information may be: PLMN1>PLMN2>PLMN3; and
the access barring percentage parameter may be: PLMN1 20%, PLMN2 50%, and PLMN3 30%.

The access barring percentage parameter refers to a ratio of access-barred terminals in each PLMN to a total number of access-barred terminals when the eNB needs to bar a terminal from accessing a shared network. For example, the access barring percentage parameter indicates that when 100 terminals need to be barred from accessing the shared network, 20 terminals in the PLMN1 are barred, 50 terminals in the PLMN2 are barred, and 30 terminals in the PLMN3 are barred.

It should be noted that step 401 may also be replaced with the following step:
receiving, by the eNB, a PLMN access permission parameter configured by a user through a network management system (OAM, Operation Administration and Maintenance).

402. When the eNB is overloaded, the eNB determines, according to the PLMN access permission parameter, a PLMN to which a terminal to be barred from accessing a shared network belongs.

When the PLMN access permission parameter is the access grant priority information, this step may include:
determining, according to the access grant priority information, that a PLMN with a lowest priority among PLMNs supported by the eNB itself is the PLMN to which the terminal to be barred from accessing the shared network belongs. For example, the access grant priority information may be PLMN1>PLMN2>PLMN3, and therefore the eNB should first bar a terminal in the PLMN3 from accessing the shared network.

When the PLMN access permission parameter is the barring priority information, this step may include:
determining, according to the access barring priority information, that a PLMN with a highest barring priority among the PLMNs supported by the eNB itself is the PLMN to which the terminal to be barred from accessing the shared network belongs. For example, the access barring priority information is PLMN3>PLMN2>PLMN1, and therefore the eNB should first bar a terminal in the PLMN3 from accessing the shared network.

When the PLMN access permission parameter is the access grant percentage parameter or the access barring percentage parameter, this step may include:
determining, according to the access grant percentage parameter or the access barring percentage parameter, the PLMN to which the terminal to be barred from accessing the shared network belongs, and determining a percentage of terminals in the PLMN among terminals that are barred from accessing the shared network. For example, it is assumed that the access barring percentage parameter is "PLMN1 20%, PLMN2 50%, and PLMN3 30%". Then the current eNB should determine that: a part of terminals in the PLMN1, a part of terminals in the PLMN2, and a part of terminals in the PLMN3 are access-barred, respectively; and the number of terminals of the PLMN1 that are barred from accessing the shared network, the number of terminals of the PLMN2 that are barred from accessing the shared network, and the number of terminals of the PLMN3 that are barred from accessing the shared network account for 20%, 50%, and 30% of the total number of the terminals that are barred from accessing the shared network, respectively.

403. The eNB broadcasts access barring information, and indicates that the access barring information is applicable to the determined PLMN.

The access barring information includes information of the PLMN to which the terminal to be barred from accessing the shared network belongs, so as to indicate that the access barring information is applicable to the determined PLMN, where the PLMN is determined in step 402 and the information of the PLMN may be an identifier of the PLMN.

Alternatively, in step 403, access barring information and the PLMN to which the terminal to be barred from accessing the shared network belongs are specifically broadcast, where the PLMN is determined in step 402, so as to indicate that the access barring information is applicable to the determined PLMN.

It should be noted that the access barring information broadcast in step 403 includes an AC value and/or an access barring factor. The AC value may be used by a terminal to determine whether the terminal itself is barred from accessing the shared network. One of conditions for determining that a terminal is barred from accessing the shared network may be that an AC value stored in the terminal itself is the same as the AC value broadcast by the eNB, and the access barring factor is a comparison basis for a terminal to determine whether the terminal itself is barred from accessing the shared network.

404. A terminal determines whether the terminal itself is barred from accessing the shared network.

Specifically, when a terminal determines that its own AC value is the same as the AC value in the access barring information and the terminal belongs to the determined PLMN, the shared network cannot be connected through the current eNB, so as to reduce load of the current eNB; or the terminal learns, by calculation according to the AC value and the access barring factor that are broadcast by the eNB, whether the terminal itself is barred from accessing the current shared network.

The learning, by the terminal, by calculation according to the AC value and the access barring factor that are broadcast by the eNB, whether the terminal itself is barred from accessing the current shared network may include:
generating, by the terminal, a random number, and comparing the generated random number with the access barring factor broadcast by the eNB; and determining that the shared network cannot be connected through the current eNB if the generated random number is greater than the access barring factor broadcast by the eNB, the terminal determines that its own AC value is the same as the AC value in the access barring information, and the terminal belongs to the determined PLMN.

It should be noted that if the current eNB is still overloaded after the terminal of the determined PLMN is barred from accessing the shared network, it is determined, according to the method in step 402, that a next PLMN conforming to the PLMN access permission parameter is a PLMN barred from accessing the shared network.

In addition, when the eNB indicates in step 403 that the access barring information is applicable to the determined PLMN and the percentage of the terminals in the determined PLMN among the total number of the terminals that are barred from accessing the shared network, this step may be:
determining, by the terminal, by calculation according to the access barring information, the determined PLMN, and the percentage of the terminals in the determined PLMN among the total number of the terminals that are barred from accessing the shared network, whether the terminal itself is barred from accessing the shared network.

Further, in this embodiment, after step 404, the method may further include:
sending, by the MME, a message for updating the PLMN access permission parameter to the eNB; and updating, by the eNB, the PLMN access permission parameter upon receipt of the message for updating the PLMN access permission parameter that is sent by the MME; or
receiving, by the eNB, update information for the PLMN access permission parameter, where the update information is sent by the user through the OAM; and updating the PLMN access permission parameter according to the update information.

In the method for controlling access of a terminal to a shared network shown in FIG. 4, when an eNB is overloaded, a PLMN to which a terminal to be barred from accessing a shared network belongs is determined, and access barring information is broadcast, where the access barring information includes information of the determined PLMN to which the terminal to be barred from accessing the shared network belongs; or access barring information and the determined PLMN to which the terminal to be barred from accessing the shared network belongs are broadcast, so that a terminal can determine, according to the PLMN to which the terminal itself belongs, whether the terminal itself can access the shared network, thereby lowering load of the eNB and solving the problem that wireless communications network can only simultaneously bar terminals of all PLMNs with network sharing, and it is inconvenient for operators of the shared network to perform differentiated control of respective users.

As shown in FIG. 5, this embodiment further provides another method for controlling access of a terminal to a shared network. The method is applicable to a case where a network sharing mode is an MOCN mode and congestion occurs on a mobility management network element.

In MOCN mode, one PLMN may include multiple MMEs, but a same MME can belong to only one PLMN. In this embodiment, description is made based on an example that a PLMN1 shares two MMEs, which are an MME1 and an MME2, respectively, and the MME1 and the MME2 support only the PLMN1.

The method for controlling access of a terminal to a shared network shown in FIG. 5 includes:
501. When congestion occurs on the MME1, the MME1 sends an overload message to an eNB.

502. The eNB acquires a PLMN corresponding to the MME1.

It should be noted that in MOCN mode, because each MME belongs to only one PLMN, when the eNB establishes a device-level interface with an MME, the MME sends a switching message to the eNB, where the switching message indicates a PLMN to which the MME belongs; therefore, when the MME sends the overload message to the eNB, the eNB can implicitly learn on which PLMN the congestion occurs.

In this embodiment, because the eNB receives the overload message that is sent by the MME1, the eNB can learn that the PLMN corresponding to the MME1 is the PLMN1.

503. The eNB determines whether all MMEs connected to the eNB itself in the PLMN1 are overloaded; and executes step 504 if yes, or bars terminals that access the MME1 from continuing to access a shared network if no.

The eNB records all MMEs connected to the eNB itself and PLMNs that correspond to the MMEs. For example, in this embodiment, the PLMN1 includes the MME1 and the MME2. When congestion also occurs on the MME2 and the MME2 also sends an overload message to the eNB, it is considered that all the MMEs shared by the PLMN are overloaded; or when congestion does not occur on the MME2, not all the MMEs shared by the PLMN1 are overloaded.

Correspondingly, in step 503, when not all the MMEs connected to the eNB in the PLMN1 are overloaded, the eNB denies signaling that is sent by terminals in the MME1.

Further, when all the MMEs connected to the eNB in the PLMN1 are overloaded, the method may further include:
when all overload messages that are sent by all the MMEs connected to the eNB in the PLMN1 include an access-barred indicator, executing step 504; otherwise, denying signaling that is sent by terminals in the overloaded MMEs connected to the eNB in the PLMN1, where the overload messages sent by the MMEs to the eNB include the access-barred indicator.

504. Use the PLMN1 as a PLMN to which a terminal to be barred from accessing the shared network belongs.

505. The eNB broadcasts access barring information, and indicates that the access barring information is applicable to the PLMN1.

The access barring information includes information of the PLMN to which the terminal to be barred from accessing the shared network belongs, so as to indicate that the access barring information is applicable to the PLMN1, where the PLMN is determined in step 504 and the information of the PLMN may be an identifier of the PLMN.

Alternatively, in step 505, access barring information and the PLMN to which the terminal to be barred from accessing the shared network belongs are specifically broadcast, so as to indicate that the access barring information is applicable to the PLMN1, where the PLMN is determined in step 504.

It should be noted that the access barring information includes an AC value of the terminal barred from accessing the shared network and/or an access barring factor. The AC value may be used by a terminal to determine whether the terminal itself is barred from accessing the shared network. One of conditions for determining that a terminal is barred from accessing the shared network may be that an AC value stored in the terminal itself is the same as the AC value broadcast by the eNB, and the access barring factor is a comparison basis for a terminal to determine whether the terminal itself is barred from accessing the shared network.

506. A terminal determines whether the terminal itself is barred from accessing the shared network.

Specifically, when a terminal determines that its own AC value is the same as the AC value in the access barring information and the terminal belongs to the PLMN1, the shared network cannot be connected, so as to reduce load of the MME1; or the terminal learns, by calculation according to the AC value and the access barring factor that are broadcast by the eNB, whether the terminal itself is barred from accessing the current shared network.

The learning, by the terminal, by calculation according to the AC value and the access barring factor that are broadcast by the eNB, whether the terminal itself is barred from accessing the current shared network may include:
generating, by the terminal, a random number, and comparing the generated random number with the access barring factor broadcast by the eNB; and determining that the shared network cannot be connected through the current eNB if the generated random number is greater than the access barring factor broadcast by the eNB, the terminal determines that its own AC value is the same as the AC value in the access barring information, and the terminal belongs to the PLMN1.

In the method for controlling access of a terminal to a shared network shown in FIG. 5, when an MME is overloaded, by determining whether all MMEs that are shared by a PLMN supported by the MME are overloaded, a PLMN to which a terminal to be barred from accessing a shared network belongs is determined, and access barring information is broadcast, where the access barring information includes information of the determined PLMN to which the terminal to be barred from accessing the shared network belongs; or access barring information and the determined PLMN to which the terminal to be barred from accessing the shared network belongs are broadcast, so that a terminal can determine, according to the PLMN to which the terminal itself belongs, whether the terminal itself can access the shared network, thereby lowering load of the MME and solving the problem that wireless communications network can only simultaneously bar terminals of all PLMNs with network sharing, and it is inconvenient for operators of the shared network to perform differentiated control of respective users.

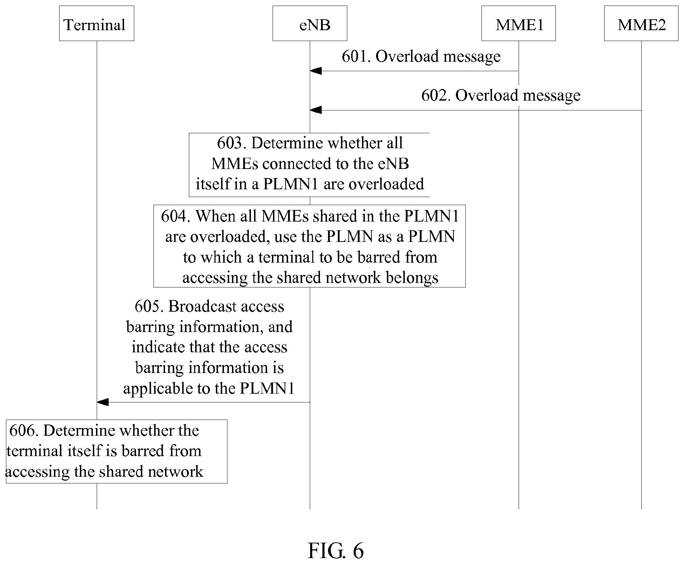

As shown in FIG. 6, this embodiment further provides another method for controlling access of a terminal to a shared network. The method is applicable to a case where a network sharing mode is a GWCN mode and congestion occurs on a mobility management network element.

In GWCN mode, multiple PLMNs may include multiple MMEs, and a same MME may support multiple PLMNs. In this method, description is made by taking the following example: An eNB is shared by a PLMN1, a PLMN2, and a PLMN3; the PLMN1 includes two MMEs, which are an MME1 and an MME2, respectively; the PLMN2 includes three MMEs, which are the MME1, the MME2, and an MME3; the PLMN3 includes one MME, which is the MME2; and the MME1, the MME2, and the MME3 have an S1 device-level connection to the eNB, respectively.

The method for controlling access of a terminal to a shared network shown in FIG. 6 may include:
601. When congestion occurs on the MME1, the MME1 sends an overload message that carries an identifier of the PLMN1 to the eNB.
602. When congestion occurs on the MME2, the MME2 sends an overload message that carries the identifier of the PLMN1 to the eNB.

It should be noted that steps 601 and 602 may be simultaneously performed, and a sequence of steps 601 and 602 may be substituted.

603. The eNB determines whether all MMEs connected to the eNB itself in the PLMN1 are overloaded; and executes step 604 if yes, or bars terminals that access the MME1 and the MME2 from accessing a shared network if no.

It should be noted that the eNB records all MMEs connected to the eNB itself and PLMNs that correspond to the MMEs. For example, in this embodiment, the PLMN1 includes the MME1 and the MME2. When congestion occurs on the MME1 and the MME2 and both send an overload message that carries the identifier of the PLMN1 to the eNB, it is considered that all the MMEs shared by the PLMN1 are overloaded; or when congestion does not occur on either of the MME1 and the MME2, not all the MMEs shared by the PLMN1 are overloaded.

Correspondingly, in step 603, when not all the MMEs connected to the eNB in the PLMN1 are overloaded, the eNB denies signaling that is sent by terminals in the MME1 and the MME2.

Further, when all the MMEs connected to the eNB in the PLMN1 are overloaded, the method may further include:
executing step 604 when all overload messages that are sent by all the MMEs connected to the eNB in the PLMN1 include an access-barred indicator; otherwise, denying signaling that is sent by terminals in the overloaded MMEs connected to the eNB in the PLMN1, where the overload messages sent by the MMEs to the eNB include the access-barred indicator.

604. Use the PLMN1 as a PLMN to which a terminal to be barred from accessing the shared network belongs.

605. The eNB broadcasts access barring information, and indicates that the access barring information is applicable to the PLMN1.

The access barring information includes information of the PLMN to which the terminal to be barred from accessing the shared network belongs, so as to indicate that the access barring information is applicable to the PLMN1, where the PLMN is determined in step 604 and the information of the PLMN may be an identifier of the PLMN.

Alternatively, in step 605, access barring information and the PLMN to which the terminal to be barred from accessing the shared network belongs are specifically broadcast, so as to indicate that the access barring information is applicable to the PLMN1, where the PLMN is determined in step 605.

It should be noted that the access barring information includes an AC value of the terminal barred from accessing the shared network and/or an access barring factor. The AC value may be used by a terminal to determine whether the terminal itself is barred from accessing the shared network. One of conditions for determining that a terminal is barred from accessing the shared network may be that an AC value stored in the terminal itself is the same as the AC value broadcast by the eNB, and the access barring factor is a comparison basis for a terminal to determine whether the terminal itself is barred from accessing the shared network.

606. A terminal determines whether the terminal itself is barred from accessing the shared network.

Specifically, when a terminal determines that its own AC value is the same as the AC value in the access barring information and the terminal belongs to the PLMN1, the shared network cannot be connected, so as to reduce loads of the MME1 and the MME2; or the terminal learns, by calculation according to the AC value and the access barring factor that are broadcast by the eNB, whether the terminal itself is barred from accessing the current shared network.

The learning, by the terminal, by calculation according to the AC value and the access barring factor that are broadcast by the eNB, whether the terminal itself is barred from accessing the current shared network may include:
generating, by the terminal, a random number, and comparing the generated random number with the access barring factor broadcast by the eNB; and determining that the shared network cannot be connected through the current eNB if the generated random number is greater than the access barring factor broadcast by the eNB, the terminal determines that its own AC value is the same as the AC value in the access barring information, and the terminal belongs to the PLMN1.

In the method for controlling access of a terminal to a shared network shown in FIG. 6, when an MME is overloaded, by determining whether all MMEs that are shared by a PLMN supported by the MME are overloaded, a PLMN to which a terminal to be barred from accessing a shared network belongs is determined, and access barring information is broadcast, where the access barring information includes information of the determined PLMN to which the terminal to be barred from accessing the shared network belongs; or access barring information and the determined PLMN to which the terminal to be barred from accessing the shared network belongs are broadcast, so that a terminal can determine, according to the PLMN to which the terminal itself belongs, whether the terminal itself can access the shared network, thereby lowering load of the MME and solving the problem that wireless communications network can only simultaneously bar terminals of all PLMNs with network sharing, and it is inconvenient for operators of the shared network to perform differentiated control of respective users.

As shown in FIG. 7, another method for controlling access of a terminal to a shared network is provided. The method is applicable to a case where a network sharing mode is a GWCN mode and congestion occurs on a mobility management network element.

In GWCN mode, multiple PLMNs may include multiple MMEs, and a same MME may support multiple PLMNs. In this method, description is made by taking the following example: An eNB is shared by a PLMN1, a PLMN2, and a PLMN3; the PLMN1 includes two MMEs, which are an MME1 and an MME2, respectively; the PLMN2 includes three MMEs, which are the MME1, the MME2, and an MME3; the PLMN3 includes one MME, which is the MME2; and the MME1, the MME2, and the MME3 have an S1 device-level connection to the eNB, respectively.

The method for controlling access of a terminal to a shared network shown in FIG. 7 may include:
701. When congestion occurs on the MME1, the MME1 sends an overload message that carries an identifier of the PLMN2 to the eNB.
702. When congestion occurs on the MME2, the MME2 sends an overload message that carries the identifier of the PLMN2 to the eNB.
703. When congestion occurs on the MME3, the MME3 sends an overload message that carries the identifier of the PLMN2 to the eNB.

It should be noted that steps 701, 702, and 703 may be simultaneously performed, and a sequence of steps 701, 702, and 703 may be freely changed.

704. The eNB determines whether all MMEs connected to the eNB itself in the PLMN2 are overloaded; and executes step 705 if yes, or bars terminals that access the MME1, the MME2, and the MM3 from accessing a shared network if no.

The eNB records MMEs that are included in all the PLMNs connected to the eNB itself. For example, in this embodiment, the PLMN2 includes the MME1, the MME2, and the MME3. When congestion occurs on all of the MME1, the MME2, and the MME3 and all of them send an overload message that carries the identifier of the PLMN2 to the eNB, it is considered that all the MMEs shared by the PLMN2 are overloaded; or when congestion does not occur on any of the MME1, the MME2, and the MME3, not all the MMEs shared by the PLMN1 are overloaded.

Correspondingly, in step 704, when not all the MMEs connected to the eNB in the PLMN2 are overloaded, the eNB denies signaling that is sent by terminals in the MME1, the MME2, and the MME3.

Further, when all the MMEs connected to the eNB in the PLMN2 are overloaded, the method may further include:
executing step 705 when all overload messages that are sent by all the MMEs connected to the eNB in the PLMN2 include an access-barred indicator; otherwise, denying signaling that is sent by terminals in the overloaded MMEs connected to the eNB in the PLMN2, where the overload messages sent by the MMEs to the eNB include the access-barred indicator.

705. Use the PLMN2 as a PLMN to which a terminal to be barred from accessing the shared network belongs.

706. The eNB broadcasts access barring information, and indicates that the access barring information is applicable to the PLMN2.

The access barring information includes information of the PLMN to which the terminal to be barred from accessing the shared network belongs, so as to indicate that the access barring information is applicable to the PLMN2, where the PLMN is determined in step 705 and the information of the PLMN may be an identifier of the PLMN.

Alternatively, in step 706, access barring information and the PLMN to which the terminal to be barred from accessing the shared network belongs are specifically broadcast, so as to indicate that the access barring information is applicable to the PLMN2, where the PLMN is determined in step 705.

It should be noted that the access barring information includes an AC value of the terminal barred from accessing the shared network and/or an access barring factor. The AC value may be used by a terminal to determine whether the terminal itself is barred from accessing the shared network. One of conditions for determining that a terminal is barred from accessing the shared network may be that an AC value stored in the terminal itself is the same as the AC value broadcast by the eNB, and the access barring factor is a comparison basis for a terminal to determine whether the terminal itself is barred from accessing the shared network.

707. A terminal determines whether the terminal itself is barred from accessing the shared network.

Specifically, when a terminal determines that its own AC value is the same as the AC value in the access barring information and the terminal belongs to the PLMN2, the shared network cannot be connected, so as to reduce loads of the MME1, the MME2, and the MME3; or the terminal learns, by calculation according to the AC value and the access barring factor that are broadcast by the eNB, whether the terminal itself is barred from accessing the current shared network.

The learning, by the terminal, by calculation according to the AC value and the access barring factor that are broadcast by the eNB, whether the terminal itself is barred from accessing the current shared network may include:
generating, by the terminal, a random number, and comparing the generated random number with the access barring factor broadcast by the eNB; and determining that the shared network cannot be connected through the current eNB if the generated random number is greater than the access barring factor broadcast by the eNB, the terminal determines that its own AC value is the same as the AC value in the access barring information, and the terminal belongs to the PLMN2.

In the method for controlling access of a terminal to a shared network shown in FIG. 7, when an MME is overloaded, by determining whether all MMEs that are shared by a PLMN supported by the MME are overloaded, a PLMN to which a terminal to be barred from accessing a shared network belongs is determined, and access barring information is broadcast, where the access barring information includes information of the determined PLMN to which the terminal to be barred from accessing the shared network belongs; or access barring information and the determined PLMN to which the terminal to be barred from accessing the shared network belongs are broadcast, so that a terminal can determine, according to the PLMN to which the terminal itself belongs, whether the terminal itself can access the shared network, thereby lowering load of the MME and solving the problem that wireless communications network can only simultaneously bar terminals of all PLMNs with network sharing, and it is inconvenient for operators of the shared network to perform differentiated control of respective users.

As shown in FIG. 8, an access network element is provided. The access network element includes:
a determining module 801, configured to determine a PLMN to which a terminal to be barred from accessing a shared network belongs; and
a broadcasting module 802, configured to broadcast access barring information, where the access barring information includes information of the PLMN to which the terminal to be barred from accessing the shared network belongs, and the PLMN is determined by the determining module 801; or broadcast access barring information and the PLMN to which the terminal to be barred from accessing the shared network belongs, where the PLMN is determined by the determining module 802, so that a terminal determines, according to the broadcast access barring information or correspondence between the broadcast access barring information and the determined PLMN to which the terminal to be barred from accessing the shared network belongs, whether the terminal itself is barred from accessing the shared network.

Further, the determining module 801 is specifically configured to:
when overload occurs, count the number of terminals in each supported PLMN, and use a PLMN in which the number of terminals reaches a preset number or a PLMN in which the number of terminals is the largest as the PLMN to which the terminal to be barred from accessing the shared network belongs;
   or,
when overload occurs, count a ratio of resources that are occupied by terminals in each supported PLMN, and use a PLMN in which terminals occupy a ratio of resources that reaches a preset ratio or a PLMN in which terminals occupy a largest ratio of resources as the PLMN to which the terminal to be barred from accessing the shared network belongs.

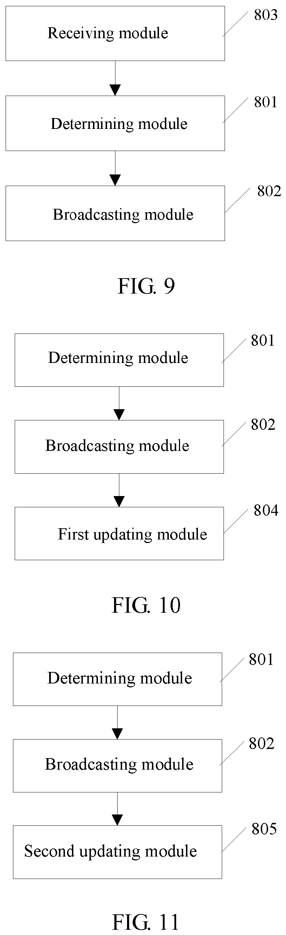

Further, as shown in FIG. 9, the access network element further includes:
a receiving module 803, configured to: before the determining module 801 determines the PLMN to which the terminal to be barred from accessing the shared network belongs, receive a first message sent by a mobility management network element, where the first message includes a PLMN access permission parameter, an overload message, or an overload message that carries a PLMN identifier; and
correspondingly the determining module 801 is specifically configured to determine, according to the PLMN access permission parameter, the overload message, or the overload message that carries the PLMN identifier, the PLMN to which the terminal to be barred from accessing the shared network belongs, where the PLMN access permission parameter, the overload message, or the overload message that carries the PLMN identifier is received by the receiving module 803;
   or,
the receiving module 803 may further be configured to: before the determining module 801 determines the PLMN to which the terminal to be barred from accessing the shared network belongs, receive a PLMN access permission parameter configured by a user through OAM; and
correspondingly the determining module 801 is specifically configured to determine, according to the PLMN access permission parameter received by the receiving module 803, the PLMN to which the terminal to be barred from accessing the shared network belongs.

Further, when the PLMN access permission parameter received by the receiving module 803 is access grant priority information, the determining module 801 is specifically configured to:
determine, according to the access grant priority information, that a PLMN with a lowest access priority among supported PLMNs is the PLMN to which the terminal to be barred from accessing the shared network belongs;
   or,
when the PLMN access permission parameter received by the receiving module 803 is barring priority information, the determining module 801 is specifically configured to:
   determine, according to the barring priority information, that a PLMN with a highest barring priority among supported PLMNs is the PLMN to which the terminal to be barred from accessing the shared network belongs.
   Further, the receiving module 803 is further configured to receive a message for updating the PLMN access permission parameter, where the message is sent by the mobility management network element; and
   correspondingly, as shown in FIG. 10, the access network element further includes:
      a first updating module 804, configured to update, according to the message for updating the PLMN access permission parameter, the PLMN access permission parameter, where the message for updating the PLMN access permission parameter is received by the receiving module 803.

Further, the receiving module 803 is further configured to receive update information for the PLMN access permission parameter, where the update information is sent by a user through OAM; and
correspondingly, as shown in FIG. 11, the access network element further includes:
a second updating module 805, configured to update, according to the update information for the PLMN access permission parameter, the PLMN access permission parameter, where the update information is received by the receiving module 803.

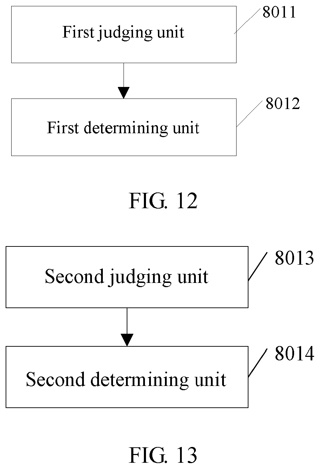

Further, as shown in FIG. 12, the determining module 801 specifically includes:
shared network belongs is determined, and access barring information is broadcast, where the access barring information includes information of the determined PLMN to which the terminal to be barred from accessing the shared network belongs; or access barring information and the PLMN to which the terminal to be barred from accessing the shared network belongs are broadcast, so that a terminal can obtain the information of the PLMN barred from accessing the shared network and determine whether the terminal itself is barred from accessing the shared network, thereby solving the problem that the wireless communications network can only simultaneously bar terminals of all PLMNs with network sharing, and it is inconvenient for operators of the shared network to perform differentiated control of respective users.

It should be noted that in the access network element provided in the foregoing embodiment, various modules and units included are classified only according to functions and logic, but the present invention is not limited to the classification as long as corresponding functions can be implemented. In addition, specific names of the functional modules and units are used to distinguish each other only, but not intended to limit the protection scope of the present invention.

In addition, a person of ordinary skill in the art may understand that all or a part of the steps in the foregoing method embodiments may be performed by a program instructing relevant hardware. The program may be stored in a computer readable storage medium. The storage medium may be a read-only memory, a magnetic disk, or an optical disc.

The foregoing descriptions are merely exemplary specific embodiments of the present invention, but are not intended to limit the protection scope of the present invention, which is defined by the appended claims. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for controlling access of a terminal to a shared network, comprising:
receiving (501), by an access network element, a first message sent by a mobility management network element, wherein the first message comprises an overload message, wherein the access network element connects multiple public land mobile networks, PLMNs, and the mobility management network element belongs to one PLMN of the multiple PLMNs;
determining (503), by the access network element, that all the mobility management network elements connected to the access network element in the one PLMN of the access network element are overloaded;
using (504), by the access network element, the one PLMN as the PLMN to which a terminal to be barred accessing the shared network belongs;
broadcasting (505), by the access network element, access barring information and information on the one PLMN.

2. The method according to claim 1, wherein determining (503), by the access network, that all the mobility management network elements connected to the access network element in the one PLMN are overloaded, using (504) the one PLMN as the PLMN to which the terminal to be barred from accessing the shared network belongs comprises:
when all the mobility management network elements connected to the access network element in the one PLMN are overloaded and all overload messages that are sent by the mobility management network elements connected to the access network element in the PLMN comprise an access-barred indicator, using the one PLMN as the PLMN to which the terminal to be barred from accessing the shared network belongs.

3. The method according to claim 1 or 2, wherein the barring information comprises access class, AC, value and/or access barring factor.

4. An access network element, comprising:
a receiving module (803), configured to receive a first message sent by a mobility management network element, wherein the first message comprises an overload message, wherein the access network element connects multiple public land mobile networks, PLMNs, and the mobility management network element belongs to one PLMN of the multiple PLMNs;
a determining module (801), configured to determine all the mobility management network elements connected to the access network element in the one PLMN of the access network element are overloaded, and configured to use the one PLMN as the PLMN to which a terminal to be barred accessing the shared network belongs; and
a broadcasting module (802), configured to broadcast access barring information and information on the one PLMN.

5. The access network element according to claim 4, wherein the determining unit (801) is specifically configured to:
determine that all the mobility management network elements connected to the access network element in the PLMN are overloaded and all overload messages that are sent by the mobility management network elements connected to the access network element in the PLMN comprise an access-barred indicator, use the one PLMN as the PLMN to which the terminal to be barred from accessing the shared network belongs.

6. The access network element according to claim 4 or 5, wherein the barring information comprises access class, AC, value and/or access barring factor.

7. A computer-readable storage medium comprising instructions which, when executed by the access network element of any one of claims 4 to 6, cause the access network element to carry out the method of anyone of claims 1 to 3.

8. A method for controlling access of a terminal to a shared network, comprising:
sending (501), by a mobility management network element, a first message to an access network element, wherein the first message comprises an overload message, wherein the access network element connects multiple public land mobile networks, PLMNs, and the mobility management network element belongs to one PLMN of the multiple PLMNs;
receiving (501), by the access network element, the first message from the mobility management network element;
determining (503), by the access network element, that all the mobility management network elements connected to the access network element in the one PLMN of the access network element are overloaded;
using (504), by the access network element, the one PLMN as the PLMN to which a terminal to be barred accessing the shared network belongs; and
broadcasting (505), by the access network element, access barring information and information on the one PLMN; terminal determines whether the terminal itself is barred from accessing the shared network..

9. The method according to claim 8, wherein determining (503), by the access network, that all the mobility management network elements connected to the access network element in the one PLMN are overloaded, using (504) the one PLMN as the PLMN to which the terminal to be barred from accessing the shared network belongs comprises:
when all the mobility management network elements connected to the access network element in the one PLMN are overloaded and all overload messages that are sent by the mobility management network elements connected to the access network element in the PLMN comprise an access-barred indicator, using the one PLMN as the PLMN to which the terminal to be barred from accessing the shared network belongs.

10. The method according to claim 8 or 9, wherein the barring information comprises access class, AC, value and/or access barring factor.

11. A system for controlling access of a terminal to a shared network, comprising a mobility management network element and an access network element;
wherein the mobility management network element has means for sending a first message to the access network element, wherein the first message comprises an overload message, wherein the access network element connects multiple public land mobile networks, PLMNs, and the mobility management network element belongs to one PLMN of the multiple PLMNs; and
the access network element has means for receiving the first message from the mobility management network element, determining that all the mobility management network elements connected to the access network element in the one PLMN of the access network element are overloaded, using the one PLMN as the PLMN to which a terminal to be barred accessing the shared network belongs, and broadcasting access barring information and information on the one PLMN.

12. The system according to claim 11, wherein the access network has means for using the one PLMN as the PLMN to which the terminal to be barred from accessing the shared network belongs, when all the mobility management network elements connected to the access network element in the one PLMN are overloaded and all overload messages that are sent by the mobility management network elements connected to the access network element in the PLMN comprise an access-barred indicator.

13. The system according to claim 11 or 12, wherein the barring information comprises access class, AC, value and/or access barring factor.

## Patentansprüche

1. Verfahren zur Steuerung eines Zugangs eines Endgeräts zu einem gemeinsam genutzten Netzwerk, das Folgendes umfasst:
Empfangen (501), durch ein Zugangsnetzelement, einer ersten Nachricht, die durch ein Mobilitätsverwaltungsnetzelement gesendet wird, wobei die erste Nachricht eine Überlastungsnachricht umfasst, wobei das Zugangsnetzelement mehrere öffentliche Landmobilnetze bzw. PLMNs verbindet und das Mobilitätsverwaltungsnetzelement zu einem PLMN der mehreren PLMNs gehört;
Bestimmen (503), durch das Zugangsnetzelement, dass alle Mobilitätsverwaltungsnetzelemente, die mit dem Zugangsnetzelement verbunden sind, in dem einen PLMN des Zugangsnetzelements überlastet sind;
Verwenden (504), durch das Zugangsnetzelement, des einen PLMN als das PLMN, zu dem ein Endgerät, das davon ausgeschlossen werden soll, auf das gemeinsam genutzte Netzwerk zuzugreifen, gehört,
Rundsenden (505), durch das Zugangsnetzelement, von Zugangsausschlussinformationen und von Informationen über das eine PLMN.

2. Verfahren nach Anspruch 1, wobei das Bestimmen (503), durch das Zugangsnetzelement, dass alle Mobilitätsverwaltungsnetzelemente, die mit dem Zugangsnetzelement verbunden sind, in dem einen PLMN überlastet sind, unter Verwendung (504) des einen PLMN als das PLMN, zu dem das Endgerät, das davon ausgeschlossen werden soll, auf das gemeinsam genutzte Netzwerk zuzugreifen, gehört, Folgendes umfasst:
wenn alle Mobilitätsverwaltungsnetzelemente, die mit dem Zugangsnetzelement verbunden sind, in dem einen PLMN überlastet sind und alle Überlastungsnachrichten, die durch die Mobilitätsverwaltungsnetzelemente, die mit dem Zugangsnetzelement verbunden sind, in dem PLMN gesendet werden, einen Zugangsausschluss-Indikator umfassen, Verwenden des einen PLMN als das PLMN, zu dem das Endgerät, das davon ausgeschlossen werden soll, auf das gemeinsam genutzte Netzwerk zuzugreifen, gehört.

3. Verfahren nach Anspruch 1 oder 2, wobei die Ausschlussinformationen einen Zugangsklassen- bzw. AC-Wert und/oder einen Zugangsausschlussfaktor umfassen.

4. Zugangsnetzelement, das Folgendes umfasst:
ein Empfangsmodul (803), das ausgelegt ist zum Empfangen einer ersten Nachricht, die durch ein Mobilitätsverwaltungsnetzelement gesendet wird, wobei die erste Nachricht eine Überlastungsnachricht umfasst, wobei das Zugangsnetzelement mehrere öffentliche Landmobilnetze bzw. PLMNs verbindet und das Mobilitätsverwaltungsnetzelement zu einem PLMN der mehreren PLMNs gehört;
ein Bestimmungsmodul (801), das ausgelegt ist zum Bestimmen, dass alle Mobilitätsverwaltungsnetzelemente, die mit dem Zugangsnetzelement verbunden sind, in dem einen PLMN des Zugangsnetzelements überlastet sind, und ausgelegt ist zum Verwenden des einen PLMN als das PLMN, zu dem ein Endgerät, das davon ausgeschlossen werden soll, auf das gemeinsam genutzte Netzwerk zuzugreifen, gehört; und
ein Rundsendemodul (802), das ausgelegt ist zum Rundsenden von Zugangsausschlussinformationen und von Informationen über das eine PLMN.

5. Zugangsnetzelement nach Anspruch 4, wobei die Bestimmungseinheit (801) insbesondere zu Folgendem ausgelegt ist:
Bestimmen, dass alle Mobilitätsverwaltungsnetzelemente, die mit dem Zugangsnetzelement verbunden sind, in dem PLMN überlastet sind und alle Überlastungsnachrichten, die durch die Mobilitätsverwaltungsnetzelemente, die mit dem Zugangsnetzelement verbunden sind, in dem PLMN gesendet werden, einen Zugangsausschluss-Indikator umfassen, Verwenden des einen PLMN als das PLMN, zu dem das Endgerät, das davon ausgeschlossen werden soll, auf das gemeinsam genutzte Netzwerk zuzugreifen, gehört.

6. Zugangsnetzelement nach Anspruch 4 oder 5, wobei die Ausschlussinformationen einen Zugangsklassen- bzw. AC-Wert und/oder einen Zugangsausschlussfaktor umfassen.

7. Computerlesbares Speichermedium, das Anweisungen umfasst, die bei Ausführung durch das Zugangsnetzelement nach einem der Ansprüche 4 bis 6 bewirken, dass das Zugangsnetzelement das Verfahren nach einem der Ansprüche 1 bis 3 ausführt.

8. Verfahren zur Steuerung eines Zugangs eines Endgeräts zu einem gemeinsam genutzten Netzwerk, das Folgendes umfasst:
Senden (501), durch ein Mobilitätsverwaltungsnetzelement, einer ersten Nachricht an ein Zugangsnetzelement, wobei die erste Nachricht eine Überlastungsnachricht umfasst, wobei das Zugangsnetzelement mehrere öffentliche Landmobilnetze bzw. PLMNs verbindet und das Mobilitätsverwaltungsnetzelement zu einem PLMN der mehreren PLMNs gehört;
Empfangen (501), durch das Zugangsnetzelement, der ersten Nachricht von dem Mobilitätsverwaltungsnetzelement;
Bestimmen (503), durch das Zugangsnetzelement, dass alle Mobilitätsverwaltungsnetzelemente, die mit dem Zugangsnetzelement verbunden sind, in dem einen PLMN des Zugangsnetzelements überlastet sind;
Verwenden (504), durch das Zugangsnetzelement, des einen PLMN als das PLMN, zu dem ein Endgerät, das davon ausgeschlossen werden soll, auf das gemeinsam genutzte Netzwerk zuzugreifen, gehört; und
Rundsenden (505), durch das Zugangsnetzelement, von Zugangsausschlussinformationen und von Informationen über das eine PLMN; das Endgerät bestimmt, ob das Endgerät selbst davon ausgeschlossen ist, auf das gemeinsam genutzte Netzwerk zuzugreifen.

9. Verfahren nach Anspruch 8, wobei das Bestimmen (503), durch das Zugangsnetzelement, dass alle Mobilitätsverwaltungsnetzelemente, die mit dem Zugangsnetzelement verbunden sind, in dem einen PLMN überlastet sind, unter Verwendung (504) des einen PLMN als das PLMN, zu dem das Endgerät, das davon ausgeschlossen werden soll, auf das gemeinsam genutzte Netzwerk zuzugreifen, gehört, Folgendes umfasst:
wenn alle Mobilitätsverwaltungsnetzelemente, die mit dem Zugangsnetzelement verbunden sind, in dem einen PLMN überlastet sind und alle Überlastungsnachrichten, die durch die Mobilitätsverwaltungsnetzelemente, die mit dem Zugangsnetzelement verbunden sind, in dem PLMN gesendet werden, einen Zugangsausschluss-Indikator umfassen, Verwenden des einen PLMN als das PLMN, zu dem das Endgerät, das davon ausgeschlossen werden soll, auf das gemeinsam genutzte Netzwerk zuzugreifen, gehört.

10. Verfahren nach Anspruch 8 oder 9, wobei die Ausschlussinformationen einen Zugangsklassen- bzw. AC-Wert und/oder einen Zugangsausschlussfaktor umfassen.

11. System zur Steuerung eines Zugangs eines Endgeräts zu einem gemeinsam genutzten Netzwerk, umfassend ein Mobilitätsverwaltungsnetzelement und ein Zugangsnetzelement; wobei das Mobilitätsverwaltungsnetzelement Mittel aufweist zum Senden einer ersten Nachricht an das Zugangsnetzelement, wobei die erste Nachricht eine Überlastungsnachricht umfasst, wobei das Zugangsnetzelement mehrere öffentliche Landmobilnetze bzw. PLMNs verbindet und das Mobilitätsverwaltungsnetzelement zu einem PLMN der mehreren PLMNs gehört; und
das Zugangsnetzelement Mittel aufweist zum Empfangen der ersten Nachricht von dem Mobilitätsverwaltungsnetzelement, Bestimmen, dass alle Mobilitätsverwaltungsnetzelemente, die mit dem Zugangsnetzelement verbunden sind, in dem einen PLMN des Zugangsnetzelements überlastet sind, Verwenden des einen PLMN als das PLMN, zu dem ein Endgerät, das davon ausgeschlossen werden soll, auf das gemeinsam genutzte Netzwerk zuzugreifen, gehört, und Rundsenden von Zugangsausschlussinformationen und von Informationen über das eine PLMN.

12. System nach Anspruch 11, wobei das Zugangsnetz Mittel aufweist zum Verwenden des einen PLMN als das PLMN, zu dem das Endgerät, das davon ausgeschlossen werden soll, auf das gemeinsam genutzte Netzwerk zuzugreifen, gehört, wenn alle Mobilitätsverwaltungsnetzelemente, die mit dem Zugangsnetzelement verbunden sind, in dem einen PLMN überlastet sind und alle Überlastungsnachrichten, die durch die Mobilitätsverwaltungsnetzelemente, die mit dem Zugangsnetzelement verbunden sind, in dem PLMN gesendet werden, einen Zugangsausschluss-Indikator umfassen.

13. System nach Anspruch 11 oder 12, wobei die Ausschlussinformationen einen Zugangsklassen- bzw. AC-Wert und/oder einen Zugangsausschlussfaktor umfassen.

## Revendications

1. Procédé permettant de contrôler l'accès d'un terminal à un réseau partagé, comprenant :
la réception (501), par un élément de réseau d'accès, d'un premier message envoyé par un élément de réseau de gestion de la mobilité, dans lequel le premier message comprend un message de surcharge, dans lequel l'élément de réseau d'accès connecte de multiples réseaux mobiles terrestres publics, PLMN, et l'élément de réseau de gestion de la mobilité appartient à un PLMN parmi les multiples PLMN ;
la détermination (503), par l'élément de réseau d'accès, que tous les éléments de réseau de gestion de la mobilité connectés à l'élément de réseau d'accès dans ledit PLMN de l'élément de réseau d'accès sont surchargés ;
l'utilisation (504), par l'élément de réseau d'accès, dudit PLMN comme PLMN auquel appartient un terminal dont l'accès au réseau partagé doit être interdit ;
la diffusion (505), par l'élément de réseau d'accès, d'informations d'interdiction d'accès et d'informations sur ledit PLMN.

2. Procédé selon la revendication 1, dans lequel la détermination (503), par le réseau d'accès, que tous les éléments de réseau de gestion de la mobilité connectés à l'élément de réseau d'accès dans ledit PLMN sont surchargés, en utilisant (504) ledit PLMN comme PLMN auquel appartient le terminal dont l'accès au réseau partagé doit être interdit comprend :
lorsque tous les éléments de réseau de gestion de la mobilité connectés à l'élément de réseau d'accès dans ledit PLMN sont surchargés et que tous les messages de surcharge qui sont envoyés par les éléments de réseau de gestion de la mobilité connectés à l'élément de réseau d'accès dans le PLMN comprennent un indicateur d'interdiction d'accès, l'utilisation dudit PLMN comme PLMN auquel appartient le terminal dont l'accès au réseau partagé doit être interdit.

3. Procédé selon la revendication 1 ou 2, dans lequel les informations d'interdiction comprennent une valeur de classe d'accès, AC, et/ou un facteur d'interdiction d'accès.

4. Élément de réseau d'accès, comprenant :
un module de réception (803), configuré pour recevoir un premier message envoyé par un élément de réseau de gestion de la mobilité, dans lequel le premier message comprend un message de surcharge, l'élément de réseau d'accès connectant de multiples réseaux mobiles terrestres publics, PLMN, et l'élément de réseau de gestion de la mobilité appartenant à un PLMN parmi les multiples PLMN ;
un module de détermination (801), configuré pour déterminer que tous les éléments de réseau de gestion de la mobilité connectés à l'élément de réseau d'accès dans ledit PLMN de l'élément de réseau d'accès sont surchargés, et configuré pour utiliser ledit PLMN comme PLMN auquel appartient un terminal dont l'accès au réseau partagé doit être interdit ; et
un module de diffusion (802), configuré pour diffuser des informations d'interdiction d'accès et des informations sur ledit PLMN.

5. Élément de réseau d'accès selon la revendication 4, dans lequel l'unité de détermination (801) est spécifiquement configurée pour :
déterminer que tous les éléments de réseau de gestion de la mobilité connectés à l'élément de réseau d'accès dans le PLMN sont surchargés et que tous les messages de surcharge qui sont envoyés par les éléments de réseau de gestion de la mobilité connectés à l'élément de réseau d'accès dans le PLMN comprennent un indicateur d'interdiction d'accès, utiliser ledit PLMN comme PLMN auquel appartient le terminal dont l'accès au réseau partagé doit être interdit.

6. Élément de réseau d'accès selon la revendication 4 ou 5, dans lequel les informations d'interdiction comprennent une valeur de classe d'accès, AC, et/ou un facteur d'interdiction d'accès.

7. Support de stockage lisible par ordinateur comprenant des instructions qui, lorsqu'elles sont exécutées par l'élément de réseau d'accès selon l'une quelconque des revendications 4 à 6, amènent l'élément de réseau d'accès à mettre en oeuvre le procédé selon l'une quelconque des revendications 1 à 3.

8. Procédé permettant de contrôler l'accès d'un terminal à un réseau partagé, comprenant :
l'envoi (501), par un élément de réseau de gestion de la mobilité, d'un premier message à un élément de réseau d'accès, dans lequel le premier message comprend un message de surcharge, dans lequel l'élément de réseau d'accès connecte de multiples réseaux mobiles terrestres publics, PLMN, et l'élément de réseau de gestion de la mobilité appartient à un PLMN parmi les multiples PLMN ;
la réception (501), par l'élément de réseau d'accès, du premier message à partir de l'élément de réseau de gestion de la mobilité ;
la détermination (503), par l'élément de réseau d'accès, que tous les éléments de réseau de gestion de la mobilité connectés à l'élément de réseau d'accès dans ledit PLMN de l'élément de réseau d'accès sont surchargés ;
l'utilisation (504), par l'élément de réseau d'accès, dudit PLMN comme PLMN auquel appartient un terminal dont l'accès au réseau partagé doit être interdit ; et
la diffusion (505), par l'élément de réseau d'accès, d'informations d'interdiction d'accès et d'informations sur ledit PLMN ; terminal détermine si le terminal lui-même est interdit d'accéder au réseau partagé.

9. Procédé selon la revendication 8, dans lequel la détermination (503), par le réseau d'accès, que tous les éléments de réseau de gestion de la mobilité connectés à l'élément de réseau d'accès dans ledit PLMN sont surchargés, en utilisant (504) ledit PLMN comme PLMN auquel appartient le terminal dont l'accès au réseau partagé doit être interdit comprend :
lorsque tous les éléments de réseau de gestion de la mobilité connectés à l'élément de réseau d'accès dans ledit PLMN sont surchargés et que tous les messages de surcharge qui sont envoyés par les éléments de réseau de gestion de la mobilité connectés à l'élément de réseau d'accès dans le PLMN comprennent un indicateur d'interdiction d'accès, l'utilisation dudit PLMN comme PLMN auquel appartient le terminal dont l'accès au réseau partagé doit être interdit.

10. Procédé selon la revendication 8 ou 9, dans lequel les informations d'interdiction comprennent une valeur de classe d'accès, AC, et/ou un facteur d'interdiction d'accès.

11. Système permettant de contrôler l'accès d'un terminal à un réseau partagé, comprenant un élément de réseau de gestion de la mobilité et un élément de réseau d'accès ;
dans lequel l'élément de réseau de gestion de la mobilité dispose de moyens pour envoyer un premier message à l'élément de réseau d'accès, dans lequel le premier message comprend un message de surcharge, dans lequel l'élément de réseau d'accès connecte de multiples réseaux mobiles terrestres publics, PLMN, et l'élément de réseau de gestion de la mobilité appartient à un PLMN parmi les multiples PLMN ; et
l'élément de réseau d'accès dispose de moyens pour recevoir le premier message à partir de l'élément de réseau de gestion de la mobilité, déterminer que tous les éléments de réseau de gestion de la mobilité connectés à l'élément de réseau d'accès dans ledit PLMN de l'élément de réseau d'accès sont surchargés, utiliser ledit PLMN comme PLMN auquel appartient un terminal dont l'accès au réseau partagé doit être interdit, et diffuser des informations d'interdiction d'accès et des informations sur ledit PLMN.

12. Système selon la revendication 11, dans lequel le réseau d'accès dispose de moyens pour utiliser ledit PLMN comme PLMN auquel appartient le terminal dont l'accès au réseau partagé doit être interdit, lorsque tous les éléments de réseau de gestion de la mobilité connectés à l'élément de réseau d'accès dans ledit PLMN sont surchargés et que tous les messages de surcharge qui sont envoyés par les éléments de réseau de gestion de la mobilité connectés à l'élément de réseau d'accès dans le PLMN comprennent un indicateur d'interdiction d'accès.

13. Système selon la revendication 11 ou 12, dans lequel les informations d'interdiction comprennent une valeur de classe d'accès, AC, et/ou un facteur d'interdiction d'accès.
